(19) Europäisches Patentamt
European Patent Office
Office européen des brevets

(11) **EP 3 696 992 B1**

(12) **FASCICULE DE BREVET EUROPEEN**

(45) Date de publication et mention de la délivrance du brevet:
**06.11.2024 Bulletin 2024/45**

(21) Numéro de dépôt: **20151153.2**

(22) Date de dépôt: **10.01.2020**

(51) Classification Internationale des Brevets (IPC):
**H04B 7/0456** *(2017.01)*   **H04B 7/08** *(2006.01)*
**H04B 7/0413** *(2017.01)*   **H04L 1/06** *(2006.01)*
**H04L 25/03** *(2006.01)*   **H04L 1/00** *(2006.01)*

(52) Classification Coopérative des Brevets (CPC):
**H04B 7/0854; H04B 7/0413; H04B 7/0456;**
**H04L 25/0204; H04L 25/0224; H04L 25/03019;**
**H04L 25/067;** H04L 2025/03624

(54) **MÉTHODE DE DÉTECTION POUR RÉCEPTEUR DE SYSTÈME MIMO AIDÉE PAR RÉDUCTION DE RÉSEAU DE POINTS ET SUPPRESSION ITÉRATIVE DE BRUIT**

DETEKTIONSMETHODE FÜR MIMO-SYSTEM-EMPFÄNGER MITHILFE VON PUNKTNETZ-REDUZIERUNG UND ITERATIVER RAUSCHUNTERDRÜCKUNG

DETECTION METHOD FOR MIMO SYSTEM RECEIVER ASSISTED BY REDUCTION OF POINTS NETWORK AND ITERATIVE SUPPRESSION OF NOISE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.02.2019 FR 1901358**

(43) Date de publication de la demande:
**19.08.2020 Bulletin 2020/34**

(73) Titulaire: **Commissariat à l'Energie Atomique et aux Energies Alternatives**
**75015 Paris (FR)**

(72) Inventeurs:
• **DEMMER, David**
  **38054 GRENOBLE Cedex 9 (FR)**
• **DORE, Jean-Baptiste**
  **38054 GRENOBLE Cedex 9 (FR)**

(74) Mandataire: **Brevalex**
**56, Boulevard de l'Embouchure**
**B.P. 27519**
**31075 Toulouse Cedex 2 (FR)**

(56) Documents cités:
**US-A1- 2018 287 675**

• **DIRK WUBBEN ET AL: "Lattice Reduction", IEEE SIGNAL PROCESSING MAGAZINE, IEEE SERVICE CENTER, PISCATAWAY, NJ, US, vol. 28, no. 3, 1 May 2011 (2011-05-01), pages 70 - 91, XP011354938, ISSN: 1053-5888, DOI: 10.1109/MSP.2010.938758**
• **WUBBEN D ET AL: "Near-maximum-likelihood detection of MIMO systems using MMSE-based lattice-reduction", 2004 IEEE INTERNATIONAL CONFERENCE ON COMMUNICATIONS ; ICC 2004 ; 20 - 24 JUNE 2004, PARIS, IEEE OPERATIONS CENTER, PISCATAWAY, NJ, USA, vol. 2, 20 June 2004 (2004-06-20), pages 798 - 802, XP010710431, ISBN: 978-0-7803-8533-7, DOI: 10.1109/ICC.2004.1312611**

**Description**

**DOMAINE TECHNIQUE**

La présente invention concerne le domaine des systèmes de télécommunication multi-antenne encore dénommés MIMO (*Multiple Input Multiple Output*) et plus particulièrement ceux utilisant une détection aidée par réduction de réseau (*Lattice Reduction aided MIMO detection*).

**ÉTAT DE LA TECHNIQUE ANTÉRIEURE**

Les systèmes de télécommunication multi-antenne ou MIMO (*Multiple Input Multiple Output*) sont bien connus de l'état de la technique et ont fait leur entrée, il y a une dizaine d'années, dans plusieurs normes de systèmes de télécommunication sans fil (par exemple IEEE 802.11n). Ces systèmes présentent, en raison de leur capacité de multiplexage et leur diversité spatiale, des capacités de canal sensiblement supérieures aux systèmes conventionnels mono-antenne SISO (*Single Input Single Output*).

Un système de transmission MIMO à $N_T$ antennes d'émission et $N_R$ antennes de réception est caractérisé par sa matrice de canal **H**, de taille $N_R \times N_T$ dont les éléments sont les coefficients d'atténuation complexes des canaux élémentaires entre les $N_T$ antennes d'émission et $N_R$ antennes de réception.

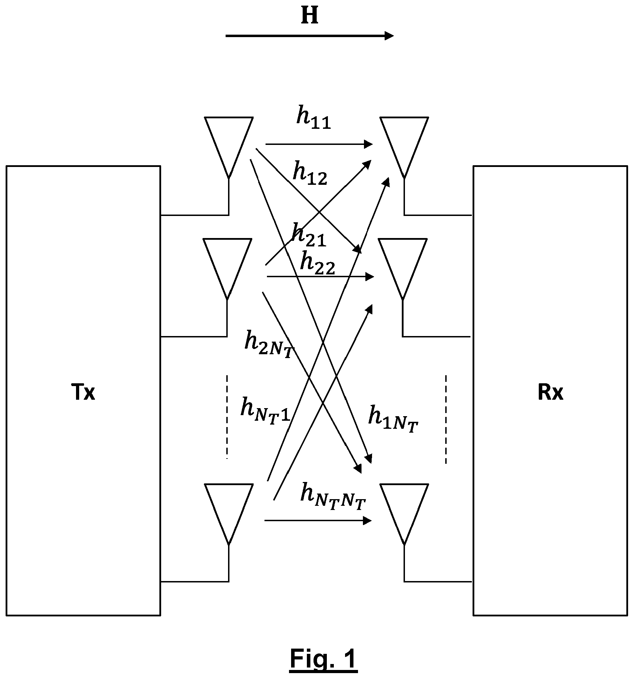

On a représenté de manière schématique en Fig. 1 un tel système MIMO. Un élément $h_{ik}$ de la matrice **H** donne le coefficient de canal élémentaire entre l'antenne d'émission d'indice $k$ et l'antenne de réception d'indice $i$.

La transmission d'un bloc de symboles dans un tel système peut être modélisée par :

$$\mathbf{y} = \mathbf{H}\mathbf{s} + \mathbf{n} \tag{1}$$

où l'on note s le vecteur des symboles respectivement transmis par les $N_T$ antennes d'émission, **y** est un vecteur de taille $N_R$ représentant les signaux respectivement reçus par les $N_R$ antennes de réception, et **n** est un vecteur de bruit blanc de taille $N_R$ dont les composantes sont des variables aléatoires centrées gaussiennes indépendantes de même variance, $\sigma_n^2$. La matrice de canal **H** est supposée connue du récepteur, par exemple au moyen d'une estimation de canal à partir de symboles pilotes.

Les symboles émis appartiennent à un alphabet de modulation, noté A, par exemple un alphabet M -QAM.

On supposera dans la suite que le nombre d'antennes de réception est supérieur ou égal au nombre d'antennes d'émission, c'est-à-dire $N_R \geq N_T$.

Les éléments des vecteurs et de la matrice intervenant dans la relation (1) étant des valeurs complexes, on traite leurs parties réelles et imaginaires séparément. Autrement dit, si $\overline{\mathbf{y}}, \overline{\mathbf{s}}$ et $\overline{\mathbf{n}}$ sont les vecteurs réels respectivement de taille $n_R, n_T$ et $n_R$ avec $n_R = 2N_R$ et $n_T = 2N_T$ définis par :

$$\overline{\mathbf{y}} = \begin{pmatrix} \Re(\mathbf{y}) \\ \Im(\mathbf{y}) \end{pmatrix} ; \ \overline{\mathbf{s}} = \begin{pmatrix} \Re(\mathbf{s}) \\ \Im(\mathbf{s}) \end{pmatrix} ; \ \overline{\mathbf{n}} = \begin{pmatrix} \Re(\mathbf{n}) \\ \Im(\mathbf{n}) \end{pmatrix} \tag{2}$$

et la matrice de canal $\overline{\mathbf{H}}$ est une matrice réelle de taille $n_R \times n_T$ définie par :

$$\overline{\mathbf{H}} = \begin{pmatrix} \Re(\mathbf{H}) & -\Im(\mathbf{H}) \\ \Im(\mathbf{H}) & \Re(\mathbf{H}) \end{pmatrix} \tag{3}$$

la relation (1) est encore valable sous forme réelle :

$$\overline{\mathbf{y}} = \overline{\mathbf{H}}\overline{\mathbf{s}} + \overline{\mathbf{n}} \tag{4}$$

Différents types de détection peuvent être prévus à la réception.

La détection optimale utilise un critère de maximum de vraisemblance ou ML (*Maximum Likelihood*), consistant à rechercher sur l'ensemble des vecteurs de symboles émis possibles celui minimisant la distance euclidienne au vecteur reçu, autrement dit :

$$\hat{\mathbf{s}}_{ML} = \arg\min_{\mathbf{s} \in A^{N_T}} \left( \|\mathbf{y} - \mathbf{Hs}\| \right) \quad (5)$$

Toutefois, cette recherche présente une complexité en $M^{n_T}$ et n'est donc pas réalisable en pratique pour des ordres de modulation élevés et un grand nombre d'antennes d'émission.

En pratique, on a recours à des méthodes de détection sous-optimales, dites linéaires, permettant de séparer les différents symboles au moyen de combinaisons linéaires. Plus précisément, revenant à la formulation complexe de la relation (1), le vecteur des symboles émis est estimé en multipliant le vecteur des signaux reçus par une matrice de détection (encore dénommée matrice d'égalisation) **W** de taille $n_T \times n_R$ :

$$\mathbf{r} = \mathbf{Wy} = \mathbf{WHs} + \mathbf{Wn} \quad (6)$$

où la matrice de détection peut prendre différentes formes en fonction du type de détection choisi : ZF (*Zero Forcing*), MMSE (*Minimum Square Error*), ou MRC (*Maximum Ratio Combining*) encore dénommé MF (*Matched Filter*) , soit :

$$\mathbf{W}_{ZF} = \mathbf{H}^{\dagger} = (\mathbf{H}^H \mathbf{H})^{-1} \mathbf{H}^H \quad (7\text{-}1)$$

$$\mathbf{W}_{MMSE} = (\mathbf{H}^H \mathbf{H} + \sigma_n^2 \mathbf{I}_{N_R})^{-1} \mathbf{H}^H \quad (7\text{-}2)$$

$$\mathbf{W}_{MF} = \mathbf{H}^H \quad (7\text{-}3)$$

Les avantages et inconvénients respectifs de ces différents types de détection sont connus : ainsi une détection de type ZF peut amplifier considérablement les composantes de bruit et une détection de type MMSE, si elle réduit cette amplification, nécessite l'estimation du rapport signal sur bruit et est donc plus complexe.

Les symboles émis sont ensuite estimés en prenant une décision ( *dec* )dure ou douce sur les composantes du vecteur égalisé, **r** :

$$\hat{\mathbf{s}}_{ZF} = dec(\mathbf{W}_{ZF}\mathbf{y}) \quad (8\text{-}1)$$

$$\hat{\mathbf{s}}_{MMSE} = dec(\mathbf{W}_{MMSE}\mathbf{y}) \quad (8\text{-}2)$$

$$\hat{\mathbf{s}}_{MF} = dec(\mathbf{W}_{MF}\mathbf{y}) \quad (8\text{-}3)$$

Par exemple dans le cas d'une décision dure, pour chaque composante du vecteur égalisé, on recherche l'élément de l'alphabet, c'est-à-dire le point de la constellation de modulation le plus proche de cette composante.

Si un détecteur linéaire ou LD (*Linear Detector*) est relativement simple, ses performances sont fonction du conditionnement de la matrice **H** et plus précisément son écart à l'orthogonalité. En effet, si les valeurs propres de la matrice $\mathbf{H}^H\mathbf{H}$ sont faibles les composantes de bruit ( **Wn** dans l'expression (3)) sont amplifiées et le taux d'erreur (BER) est élevé.

Afin de remédier à cette difficulté, il a été proposé d'effectuer une détection linéaire aidée par réduction de réseau de points comme décrit dans l'article de D. Wübben intitulé « Near-maximum likelihood détection of MIMO systems using MMSE-based lattice réduction » publié dans Proc. IEEE International Conférence on Communications, vol. 2, Juin 2004, pp. 798-802.

On rappelle tout d'abord qu'un réseau de points $\Lambda$ dans $\mathbb{R}^n$ est défini comme l'ensemble des combinaisons linéaires à coefficients entiers d'une pluralité de vecteurs $\mathbf{v}_1, ..., \mathbf{v}_n$ formant une base $V$ de $\mathbb{R}^n$ , autrement dit :

$$\Lambda = \left\{ \sum_{i=1}^{n} a_i \mathbf{v}_i \,\middle|\, a_i \in \mathbb{Z}^n \right\} \tag{9}$$

La base $V$ génératrice du réseau est représentée par la matrice $\mathbf{V} = (\mathbf{v}_1|\mathbf{v}_2|...|\mathbf{v}_n)$ dans la base canonique de $\mathbb{R}^n$, autrement dit la matrice $\mathbf{V}$ est la matrice dont les vecteurs colonnes sont les vecteurs de la base $V$.

Un même réseau de points, $\Lambda$, peut être généré par des bases différentes. Ainsi, si $V$ est une base génératrice du réseau, représentée par la matrice $\mathbf{V}$ et si $\mathbf{T}$ est une matrice unimodulaire (autrement dit une matrice à coefficients entiers et dont la valeur absolue du déterminant est égale à 1), les colonnes de la matrice $\mathbf{V'}$ définie par :

$$\mathbf{V'} = \mathbf{VT} \tag{10}$$

engendrent le même réseau de points, $\Lambda$.

La réduction d'un réseau de points $\Lambda$ consiste à trouver une base génératrice de ce réseau formée par des vecteurs de plus faible longueur et les plus proches de l'orthogonalité.

L'écart à l'orthogonalité de la base $V$ est donné par l'indicateur :

$$od(V) = \frac{\prod_{i=1}^{n} \|\mathbf{v}_i\|}{vol(\Lambda)} \tag{11}$$

où $vol(\Lambda) = |\det(\mathbf{V})|$ dénommé volume du réseau, ne dépend que de A où $\det(\mathbf{V})$ est le déterminant de la matrice $\mathbf{V}$. On notera que l'indicateur d'orthogonalité est toujours supérieur ou égal à 1, l'égalité correspond au cas d'une base orthogonale.

La réduction du réseau de points peut être approchée au moyen de l'algorithme LLL (Lenstra-Lenstra-Lovász). Une base du réseau LLL-réduite, $\tilde{V}$ de paramètre $\delta$ du réseau est obtenue à partir d'une décomposition $\mathbf{QR}$ de la matrice $\mathbf{V}$. Cette base est donnée par les vecteurs colonnes de la matrice $\tilde{\mathbf{V}} = \tilde{\mathbf{Q}}\tilde{\mathbf{R}}$ vérifiant :

$$\left|\tilde{r}_{l,k}\right| \le \frac{1}{2}\left|\tilde{r}_{l,l}\right| \text{ pour } 1 \le l \le k \le n \tag{12-1}$$

$$\delta\tilde{r}_{k-1,k-1}^2 \le \tilde{r}_{k,k}^2 + \tilde{r}_{k-1,k}^2 \text{ pour } 1 < k \le n \tag{12-2}$$

Le paramètre $\delta$ donne la qualité de la base $\tilde{V}$, l'approximation est d'autant meilleure que la valeur $\delta$ est proche de 1.

Les points d'une constellation de modulation $M$-QAM, peuvent être considérés, à une translation et un facteur multiplicatif communs près, comme des éléments de $\mathbb{Z}^2$. Ainsi le vecteur réel $\overline{\mathbf{s}} \in \mathbb{Z}^{n_T}$ et le vecteur réel $\overline{\mathbf{Hs}}$ est un élément du réseau de points $\Lambda_H$ engendré par les vecteurs-colonnes de $\overline{\mathbf{H}}$ dans l'espace $\mathbb{R}^{n_T}$. Le vecteur $\overline{\mathbf{y}}$ est par conséquent un point de $\mathbb{R}^{n_T}$ résultant de la somme d'un vecteur du réseau $\Lambda_H$ et d'un vecteur de bruit.

La réduction du réseau et notamment sa réduction LLL permet d'obtenir une base de ce réseau composée de vecteurs courts et proches de la condition d'orthogonalité. Si $\tilde{\mathbf{H}}$ est la matrice du canal représenté dans cette nouvelle base, on a :

$$\tilde{\mathbf{H}} = \overline{\mathbf{H}}\mathbf{T} \tag{13}$$

où $\mathbf{T}$ est une matrice unimodulaire de taille $n_T \times n_T$. L'ensemble des vecteurs colonnes de $\mathbf{T}$ est appelé base réduite.

La relation (4) peut alors se ré-écrire sous la forme :

$$\overline{\mathbf{y}} = \overline{\mathbf{H}}\mathbf{T}\left(\mathbf{T}^{-1}\overline{\mathbf{s}}\right) + \overline{\mathbf{n}} = \tilde{\mathbf{H}}\overline{\mathbf{z}} + \overline{\mathbf{n}} \tag{14}$$

où $\overline{\mathbf{z}} = \mathbf{T}^{-1}\overline{\mathbf{s}}$ représente le signal reçu dans la base réduite et la matrice $\tilde{\mathbf{H}}$ est mieux conditionnée que la matrice $\mathbf{H}$. Il est important de comprendre que le point $\tilde{\mathbf{H}}\overline{\mathbf{z}}$ est identique au point $\overline{\mathbf{H}}\overline{\mathbf{s}}$ du réseau $\Lambda_{\mathrm{H}}$.

Si l'on effectue une détection linéaire à la réception, on a dans le domaine réel :

$$\overline{\mathbf{r}} = \overline{\mathbf{W}}\overline{\mathbf{y}} = \overline{\mathbf{W}}\tilde{\mathbf{H}}\overline{\mathbf{z}} + \overline{\mathbf{W}}\overline{\mathbf{n}} \tag{15}$$

avec $\overline{\mathbf{r}} = \begin{pmatrix} \Re(\mathbf{r}) \\ \Im(\mathbf{r}) \end{pmatrix}$ et $\overline{\mathbf{W}} = \begin{pmatrix} \Re(\tilde{\mathbf{W}}) & -\Im(\tilde{\mathbf{W}}) \\ \Im(\tilde{\mathbf{W}}) & \Re(\tilde{\mathbf{W}}) \end{pmatrix}$ où la matrice de détection linéaire est obtenue cette fois-ci à partir de $\tilde{\mathbf{H}}$ :

$$\tilde{\mathbf{W}}_{ZF} = \tilde{\mathbf{H}}^{\dagger} = (\tilde{\mathbf{H}}^{H}\tilde{\mathbf{H}})^{-1}\tilde{\mathbf{H}}^{H} \tag{15-1}$$

$$\tilde{\mathbf{W}}_{MMSE} = (\tilde{\mathbf{H}}^{H}\tilde{\mathbf{H}} + \sigma_{n}^{2}\mathbf{I}_{N_{R}})^{-1}\tilde{\mathbf{H}}^{H} \tag{15-2}$$

$$\tilde{\mathbf{W}}_{MF} = \tilde{\mathbf{H}}^{H} \tag{15-3}$$

Pour des raisons de simplification des notations, nous abandonnerons dans la suite les traits suscrits pour les vecteurs et matrices réelles. Ainsi, la relation (15) s'écrit sous forme simplifiée :

$$\mathbf{r} = \tilde{\mathbf{W}}\mathbf{y} = \tilde{\mathbf{W}}\tilde{\mathbf{H}}\mathbf{z} + \tilde{\mathbf{W}}\mathbf{n} \tag{16}$$

L'homme du métier comprendra toutefois que les vecteurs et matrices apparaissant dans l'équation (16) sont à valeurs réelles et que leurs dimensions sont doubles de celles figurant dans l'équation (6).

Une première méthode de détection linéaire aidée par réduction de réseau de points ou LR-LD (*Lattice Reduction aided Linear Detection*) a été décrite dans l'article précité. Elle consiste à quantifier chaque composante $z_i$, $i = 1, ..., n_T$ de $\mathbf{z}$ sur le $i$ème vecteur de la base réduite. La quantification de la composante $z_i$ est réalisée en recherchant le point appartenant à la projection de la constellation produit $A^{N_T}$ sur le $i$-ème vecteur. En d'autres termes, dans chacune des directions portées par un vecteur de la base réduite, on recherche le point de la projection de la constellation $A^{N_T}$ sur cette direction qui est le plus proche de la composante de z sur ce vecteur.

Une seconde méthode de détection linéaire aidée par réduction de réseau, également décrite dans l'article précité, dénommée ci-après LR-LD-SIC (*Lattice Reduced Linear Detection with Successive Interference Concettation*) consiste à effectuer une décomposition QR de la matrice de canal $\tilde{\mathbf{H}}$ (où $\mathbf{Q}$, $\mathbf{R}$ sont respectivement une matrice orthogonale et une matrice triangulaire supérieure) puis à détecter les composantes de $\mathbf{z}$, en commençant par la composante $z_{n_T}$ non interférée par les autres composantes (du fait de la structure triangulaire supérieure de $\mathbf{R}$). Les colonnes de $\tilde{\mathbf{H}}$ peuvent être permutées (ce qui est équivalent à une permutation des antennes d'émission) de manière à ce que le rapport signal sur bruit de la composante $z_{n_T}$ soit le plus élevé possible. Autrement dit, on effectue pour chaque permutation des colonnes de $\tilde{\mathbf{H}}$ une décomposition QR et l'on sélectionne la permutation conduisant au coefficient $r_{n_T n_T}$ le plus élevé.

La méthode LR-LD présente l'inconvénient d'opérer une troncation sous-optimale dans la mesure où selon l'ordre selon lequel les composantes de z sont tronquées, les performances en termes de BER peuvent être très différentes, ce pour une même valeur de rapport signal sur bruit (SNR).

La méthode LR-LD-SIC est performante lorsque la détection linéaire est de type MMSE mais elle nécessite une importante quantité de calculs, en particulier pour des configurations MIMO ayant un grand nombre d'antennes, ce qui n'est guère compatible avec la capacité calculatoire d'un terminal mobile.

En outre, ni la méthode LR-LD ni la méthode LR-LD-SD ne sont à même de fournir des sorties souples, telles que celles nécessaires à décodage canal à entrées souples lorsqu'un turbocode, un code convolutif ou un code LDPC est utilisé à l'émission.

Un but de la présente invention est par conséquent de proposer une méthode de détection pour un récepteur de système MIMO aidée par réduction de réseau de points, qui présente de bonnes performances en termes de taux d'erreur en fonction de rapport signal sur bruit, sans nécessiter de calculs importants. Un but subsidiaire de la présente invention est de proposer une telle méthode de détection MIMO aidée par réduction de réseau de points qui soit en outre capable de fournir un résultat de détection sous forme de valeurs souples.

## EXPOSÉ DE L'INVENTION

La présente invention est définie par une méthode de détection pour récepteur de système MIMO à $N_T$ antennes d'émission et $N_R$ antennes de réception, caractérisé par une matrice de canal **H**, chaque antenne d'émission transmettant un symbole appartenant à une constellation de modulation, le vecteur des symboles émis appartenant à une constellation produit dans l'espace $\mathbb{R}^{2N_T}$, la matrice de canal **H** faisant l'objet d'une réduction LLL pour fournir une matrice de canal réduite, $\tilde{\mathbf{H}}$, telle que $\tilde{\mathbf{H}} = \mathbf{HT}$ où **T** est une matrice unimodulaire, le vecteur des signaux reçus par les antennes de réception étant égalisé au moyen d'une matrice de détection linéaire $\tilde{\mathbf{W}}$, obtenue à partir de la matrice de canal réduite, $\tilde{\mathbf{H}}$, pour fournir un vecteur égalisé r, dans une base réduite formée des vecteurs colonnes de la matrice **T**, le vecteur égalisé étant représenté par **c = Tr** dans une base réduite formée des vecteurs colonnes de la matrice **T**, dans laquelle on définit, dans la représentation selon la base réduite, une zone de réception non bruitée $Z_\varepsilon$ entourant la constellation produit avec une marge de tolérance prédéterminée $\varepsilon$, le vecteur égalisé faisant ensuite l'objet d'un processus itératif de suppression de bruit dans lequel, à chaque itération, on recherche la composante ($\ell$) du vecteur égalisé dans la base réduite, la plus éloignée de la zone de réception non bruitée, et l'on soustrait du vecteur égalisé c un vecteur de bruit dont le module est une fraction de la marge de tolérance et la direction est celle de la composante ainsi déterminée, le processus étant itéré jusqu'à ce que le point représentatif du vecteur égalisé se trouve dans ladite zone de réception non bruitée ou qu'un nombre prédéterminé d'itérations soit atteint, le résultat de la détection étant obtenu en effectuant une décision dure ou souple sur le vecteur égalisé au terme du processus itératif.

La matrice de détection linéaire est notamment choisie parmi des matrices de détection ZF, MMSE ou MF définies respectivement par :

$$\tilde{\mathbf{W}}_{ZF} = \tilde{\mathbf{H}}^{\dagger} = (\tilde{\mathbf{H}}^{H}\tilde{\mathbf{H}})^{-1}\tilde{\mathbf{H}}^{H}$$

$$\tilde{\mathbf{W}}_{MMSE} = (\tilde{\mathbf{H}}^{H}\tilde{\mathbf{H}} + \sigma_n^2 \mathbf{I}_{N_R})^{-1}\tilde{\mathbf{H}}^{H}$$

$$\tilde{\mathbf{W}}_{MF} = \tilde{\mathbf{H}}^{H}$$

où $\sigma_n^2$ est la variance du bruit affectant le signal reçu par une antenne de réception et $\mathbf{I}_{N_R}$ est la matrice identité de taille $N_R$.

Les constellations de modulation relatives aux différentes antennes d'émission sont typiquement des constellations QAM. Les constellations de modulation relatives aux différentes antennes sont avantageusement choisies identiques.

Avantageusement, pour déterminer la composante du vecteur égalisé dans la base réduite, la plus éloignée de la zone non bruitée, on recherche l'indice $\ell$ tel que $\ell = \arg\max_i \left( c_i - s_{\max} - \varepsilon / v_i \right)$ où $c_i$ est la i$^{\text{ème}}$ composante du vecteur égalisé **c**, $s_{\max}$ est l'amplitude maximale de la constellation QAM, et $v_i = \max_{j \neq i} \left( \left| \left\langle \mathbf{t}_i | \mathbf{t}_j \right\rangle \right| \right)$ où est le i$^{\text{ème}}$ vecteur colonne de **T** .

Le vecteur de bruit soustrait au vecteur égalisé **c** peut être déterminé par $\mathbf{a}_\ell \, \text{sgn}(c_\ell). \mu . \left( \dfrac{\varepsilon}{v_\ell} \right)$ où $\mathbf{a}_\ell$ est la $\ell$-ème colonne de la matrice **A**, où **A** est la matrice Gram de la base réduite, $\mathbf{A} = \mathbf{TT}^T$, $\text{sgn}(c_\ell)$ est le signe de la $\ell$-ème composante du vecteur égalisé **c** et $\mu$ est la valeur de ladite fraction. On pourra notamment choisir $\mu = \dfrac{1}{2}$ .

Selon une première variante, on effectue une décision dure sur le vecteur égalisé au terme du processus itératif, en recherchant le point de la constellation produit le plus proche de ce vecteur.

Selon une seconde variante, préalablement au processus itératif on initialise les variances, $\sigma_{n,m}^2$, du bruit

$$\sigma_{n,m}^2 = \left( \sigma_n^2 \sum_{i=1}^{N_T} \left| \tilde{W}_{m,i} \right|^2 + \sigma_a^2 \sum_{\substack{j=1 \\ j \neq m}}^{N_T} \left| \tilde{\beta}_{m,j} \right|^2 \right) \Bigg/ \left| \tilde{\beta}_{m,m} \right|^2$$

affectant chacune des composantes du vecteur égalisé c par    où

$\sigma_n^2$ est la variance du bruit affectant le signal reçu par une antenne de réception, $\sigma_a^2$ est la puissance moyenne de la constellation de modulation, $\tilde{W}_{m,i}$ est l'élément de la matrice $\tilde{\mathbf{W}}$ à la ligne $m$ et la colonne $i$, $\tilde{\beta}_{m,j}$ est l'élément de la matrice $\beta = \tilde{\mathbf{W}}\mathbf{H}$ à la ligne $m$ et la colonne $j$ et qu'à chaque itération on met ensuite à jour ces variances par

$$\sigma_{n,m}^2 = \sigma_{n,m}^2 + \mu^2 \left( \frac{\varepsilon}{v_\ell} \right)^2 \left| A_{m,\ell} \right|^2$$

où $A_{m,\ell}$ est l'élément à la ligne $m$ et la colonne $\ell$ de la matrice de Gram, $\mathbf{A}$.

Dans ce dernier cas, on peut calculer pour chaque symbole émis par une antenne d'émission $m$ les valeurs souples des différents bits $b_{m,q}$, $b_{m,q}$ étant le $q^{\text{ème}}$ bit du mot ayant servi à générer le symbole émis $\mathbf{s}_m$, les valeurs

souples étant données par $L\left( b_{m,q} \right) = \frac{1}{2\sigma_{n,m}^2} \left( \min_{\mathbf{u} \in S_{m,q}^1} \left( \left\| \mathbf{c} - \mathbf{u} \right\|^2 - \min_{\mathbf{u} \in S_{m,q}^0} \left( \left\| \mathbf{c} - \mathbf{u} \right\|^2 \right) \right) \right)$ où $\sigma_{n,m}^2$ est la valeur de la variance affectant la $m$-ème composante du vecteur égalisé c au terme du processus itératif, $S_{m,q}^0$ est l'ensemble des points de la constellation produit admettant $b_{m,q} = 0$ et $S_{m,q}^1$ est l'ensemble des points de la constellation produit admettant $b_{m,q} = 1$.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 représente de manière schématique un système MIMO connu de l'état de la technique ;
La Fig. 2 représente de manière schématique un ordinogramme d'une méthode de détection linéaire aidé par réseau de points et réduction successive de bruit selon un premier mode de réalisation de l'invention ;
La Fig. 3 illustre de manière schématique un exemple de réduction de bruit dans une étape la méthode de la Fig. 2 ;
La Fig. 4 représente de manière schématique un ordinogramme d'une méthode de détection linéaire aidé par réseau de points et réduction successive de bruit selon un second mode de réalisation de l'invention ;
La Fig. 5 représente le débit du système MIMO en fonction du rapport signal sur bruit pour un procédé de détection selon le second mode de réalisation de l'invention et selon un procédé de détection selon l'état de la technique.

## EXPOSÉ DÉTAILLÉ DE MODES DE RÉALISATION PARTICULIERS

On considérera dans la suite un système MIMO comme décrit en relation avec la Fig. 1. Les symboles d'information émis par les $N_T$ antennes d'émission appartiennent à des constellations QAM. Sans perte de généralité, on supposera que l'alphabet (ou constellation) de modulation utilisé(e) pour les différentes antennes d'émission est identique, en d'autres termes un bloc de symboles émis appartient à une constellation produit $A^{N_T}$. On supposera également que la puissance d'émission de chaque antenne est normalisée à 1. En absence de bruit, le signal reçu peut être représenté par un point du réseau de points $\Lambda_H$ engendré par les vecteurs-colonnes de $\mathbf{H}$ dans l'espace $\mathbb{R}^{n_T}$ avec $n_T$

$= 2N_T$. En présence de bruit, le signal reçu peut être considéré comme un point de $\mathbb{R}^{n_T}$ obtenu au moyen d'une translation par un vecteur de bruit d'un point du réseau $\Lambda_{\mathbf{H}}$.

On supposera en outre, comme précédemment, que les éléments de la matrice $\mathbf{H}$ sont connus du récepteur, par exemple au moyen d'une estimation de canal réalisée à partir de symboles pilotes.

L'idée à la base de l'invention est de procéder à une suppression de bruit par réduction itérative du bruit sur les différentes composantes du signal égalisé, dans la base réduite du réseau de points.

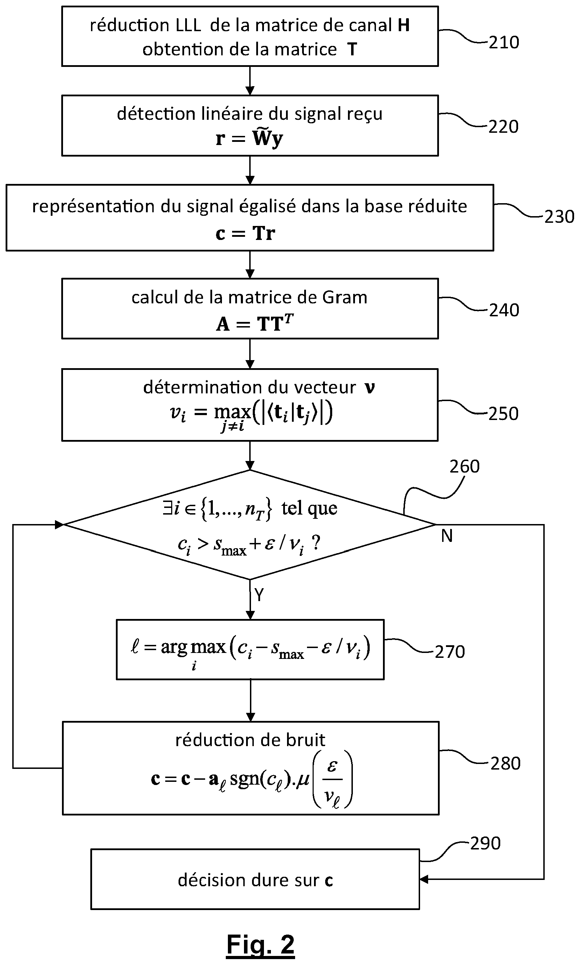

La Fig. 2 représente de manière schématique un ordinogramme d'une méthode de détection linéaire aidée par réseau de points et réduction successive de bruit selon un premier mode de réalisation de l'invention.

A l'étape 210, on effectue une réduction LLL du réseau de points $\Lambda_\mathbf{H}$ engendré par les vecteurs colonnes de la matrice de canal, exprimée sous forme réelle, c'est-à-dire de taille $n_R \times n_T$. Cette réduction LLL est connue en soi, elle utilise une décomposition QR de la matrice de canal ($\mathbf{H} = \mathbf{QR}$ où $\mathbf{Q}$ est une matrice orthogonale et $\mathbf{R}$ une matrice triangulaire supérieure) et fournit en retour des matrices $\tilde{\mathbf{Q}}$, $\tilde{\mathbf{R}}$ et $\mathbf{T}$ avec $\tilde{\mathbf{H}} = \tilde{\mathbf{Q}}\tilde{\mathbf{R}}$ où $\tilde{\mathbf{H}}$ est la base ($\delta$- )LLL réduite de $\Lambda_\mathbf{H}$ (ou matrice de canal dans la base réduite), $\tilde{\mathbf{Q}}$ est une matrice orthogonale et $\tilde{\mathbf{R}}$ une matrice triangulaire supérieure et $\mathbf{T}$ est une matrice de transformation unimodulaire de taille $n_T \times n_T$ telle que $\tilde{\mathbf{H}} = \mathbf{HT}$ , les vecteurs colonnes de $\mathbf{T}$ formant la base réduite.

A l'étape 220, on effectue une détection linéaire du signal reçu au moyen d'une matrice d'égalisation $\tilde{\mathbf{W}}$.

Cette détection linéaire pourra être par exemple une détection de type ZF ( $\tilde{\mathbf{W}} = \tilde{\mathbf{W}}_{ZF}$), de type MMSE ($\tilde{\mathbf{W}} = \tilde{\mathbf{W}}_{MMSE}$) ou de type MF ($\tilde{\mathbf{W}} = \tilde{\mathbf{W}}_{MF}$), de manière connue en soi. Si l'on note $\mathbf{y}$ le vecteur reçu par les antennes de réception et $\mathbf{r} = \tilde{\mathbf{W}}\mathbf{y}$ le vecteur égalisé. Ce dernier peut être considéré comme un vecteur réel à $n_T = 2N_T$ éléments.

A l'étape 230, on obtient une représentation du signal égalisé dans la base réduite en calculant le vecteur $\mathbf{c} = \mathbf{Tr}$ de taille $n_T$.

A l'étape 240, on calcule la matrice de Gram $\mathbf{A} = \mathbf{TT}^T$ de la base réduite et si la matrice de Gram est non-diagonale, on passe à l'étape 250. La matrice de Gram donne les produits scalaires des vecteurs colonnes de $\mathbf{T}$ .

On notera que si la matrice $\mathbf{A}$ est diagonale, les vecteurs colonnes de $\mathbf{T}$ sont orthogonaux entre eux. Dans ce cas, on termine la détection à l'étape 290.

A l'étape 250, on détermine pour chaque vecteur de la base réduite, c'est-à-dire chaque vecteur colonne $\mathbf{t}_i$ $i =$ 1, ..., $n_T$, de la matrice $\mathbf{T}$ le vecteur colonne $\mathbf{t}_k$ tel que :

$$k = \arg\max_{j \neq i} \left( \left| \left\langle \mathbf{t}_i \middle| \mathbf{t}_j \right\rangle \right| \right) \tag{17}$$

où $\langle \mathbf{t}_i | \mathbf{t}_j \rangle$ représente le produit scalaire des vecteurs $t_i$ et $\mathbf{t}_j$ de la base réduite. Autrement dit, pour chaque vecteur de la base réduite, on détermine le vecteur colonne qui vérifie le moins bien la condition d'orthogonalité. On construit ainsi un vecteur v de taille $n_T$ dont les éléments sont les éléments sont $v_i = \max_{j \neq i} \left( \left| \left\langle \mathbf{t}_i \middle| \mathbf{t}_j \right\rangle \right| \right)$ . Une manière simple de construire ce vecteur est de rechercher sur chaque ligne de $\mathbf{A}$, l'élément non diagonal dont la valeur absolue est la plus élevée.

On entre ensuite dans une boucle itérative de réduction de bruit en 260.

A l'étape 260, on détermine si la condition suivante est vérifiée :

$$\exists i \in \{1, ..., n_T\} \text{ tel que } c_i > s_{\max} + \varepsilon / v_i \tag{18}$$

où $s_{\max}$ est l'amplitude maximale d'un point de la constellation et $\varepsilon$ est une valeur positive représentant une marge d'erreur prédéterminée. Le choix de la valeur de la marge d'erreur est le résultat d'un compromis entre la vitesse de convergence et la tolérance d'erreur sur le résultat de la détection, plus cette marge sera faible et plus la convergence sera lente et moins le résultat sera erroné.

Si la condition (18) n'est pas vérifiée, autrement dit si toutes les composantes du vecteur égalisé vérifient $c_i \leq s_{\max} + \varepsilon/v_i$ on termine la détection en 290.

A défaut, on détermine en 270 la composante $\ell$ du vecteur égalisé qui s'écarte le plus de la constellation produit, plus précisément qui s'écarte le plus d'une zone de sécurité (dite aussi de réception non bruitée) $Z_\varepsilon$ dans l'espace $\mathbb{R}^{n_T}$ entourant la constellation produit avec une marge de bruit de largeur $\varepsilon$ :

$$\ell = \arg\max_i \left( c_i - s_{\max} - \varepsilon / v_i \right) \tag{19}$$

En d'autres termes, on recherche la direction d'erreur maximale par rapport à la constellation produit. Il est essentiel de noter que cette recherche est effectuée dans la base réduite, autrement dit, dans une base non-orthogonale.

On effectue ensuite en 280 une réduction de bruit en soustrayant au vecteur égalisé une fraction $\mu$ de la marge d'erreur selon la direction de la composante déterminée à l'étape précédente :

$$\mathbf{c} = \mathbf{c} - \mathbf{a}_\ell \, \mathrm{sgn}(c_\ell).\mu\left(\frac{\varepsilon}{v_\ell}\right) \tag{20}$$

où a, est le vecteur colonne d'indice $\ell$ de la matrice de Gram, $\mathbf{A}$ . On choisira par exemple $\mu = \dfrac{1}{2}$ .

Autrement dit, on rapproche le vecteur égalisé de la zone non bruitée $Z_\varepsilon$ en réduisant la distance à cette zone dans la direction d'erreur maximale. On utilise de préférence une fraction de $\dfrac{1}{2}$ mais il est clair que d'autres fractions peuvent être utilisées.

On notera que le vecteur égalisé, mis à jour au moyen de la relation (20), ne voit pas seulement sa composante $c_\ell$ être modifiée puisque $\mathbf{A}$ n'est pas une matrice diagonale.

Ainsi l'algorithme de détection pourra passer plusieurs fois sur la même direction, en corrigeant une erreur introduite sur une autre direction.

L'algorithme se poursuit en retournant à l'étape de test 260.

Les itérations se terminent lorsque le vecteur égalisé se trouve dans la zone de réception non bruitée $Z_\varepsilon$ (auquel cas le bruit aura été supprimé) ou, à défaut, lorsqu'un nombre maximal d'itérations est atteint (absence de convergence). En cas de convergence, le vecteur égalisé se trouve au pire à une distance $(1 - \mu)\varepsilon$ de la constellation et dans le cas où $\mu = \dfrac{1}{2}$ , au milieu de la marge d'erreur.

A l'étape 290, on effectue une quantification du vecteur égalisé ayant fait l'objet de la réduction itérative de bruit. Cette quantification est réalisée comme dans l'art antérieur, en recherchant le point de la constellation le plus proche du point représentant le vecteur égalisé.

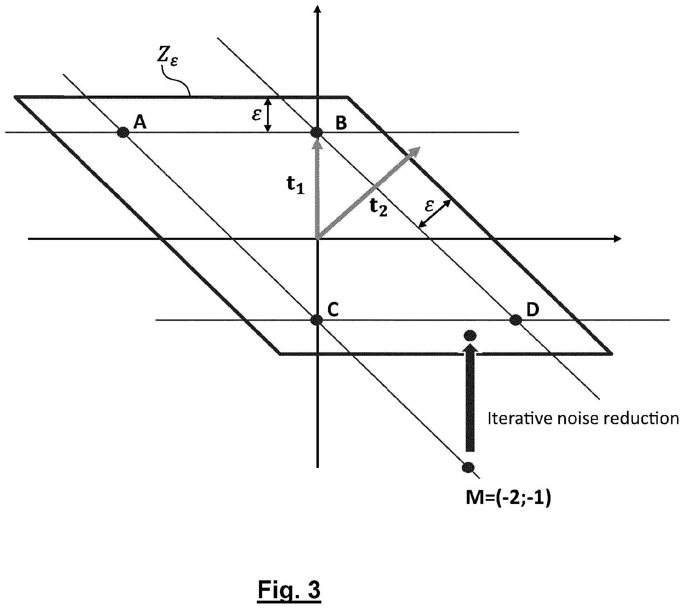

La Fig. 3 illustre sur un exemple l'étape de réduction de bruit 280. Dans cet exemple, on a supposé que l'on avait une seule antenne d'émission ($n_T = 2$) et que la constellation de modulation utilisée était une constellation 4-QAM. La constellation produit se réduit donc à cette constellation 4-QAM.

La constellation produit a été représentée dans la base réduite, autrement dit la figure représente l'image de l'alphabet de modulation A par la transformation $\mathbf{T}^{-1}$.

La base réduite est constituée des vecteurs $\mathbf{t}_1 = \begin{pmatrix} 0 \\ 1 \end{pmatrix}$ et $\mathbf{t}_2 = \begin{pmatrix} 1 \\ 1 \end{pmatrix}$ et donc la matrice de transformation est $\mathbf{T} = \begin{pmatrix} 0 & 1 \\ 1 & 1 \end{pmatrix}$. La matrice de Gram est alors $\mathbf{A} = \begin{pmatrix} 1 & 1 \\ 1 & 2 \end{pmatrix}$ .

Les symboles de modulation non bruités, c'est-à-dire les points de la constellation de modulation sont représentés en A, B, C, D. Le signal reçu, après égalisation, c'est-à-dire le vecteur r, est représenté par le point M. Le vecteur c est supposé être ici $\begin{pmatrix} -2 \\ -1 \end{pmatrix}$ .

La zone de réception non bruitée, autrement dit la zone $Z_\varepsilon$ entoure la constellation de modulation avec une marge d'erreur $\varepsilon$.

Selon la direction du vecteur $\mathbf{t}_2$, le point M appartient à la zone $Z_\varepsilon$ et donc on ne réduit pas le bruit selon cette direction.

En revanche, selon la direction du vecteur $\mathbf{t}_1$, le point M n'appartient pas à à la zone $Z_\varepsilon$ et donc il est ramené vers cette zone selon cette direction au moyen de l'expression (16) où $\mu = \dfrac{1}{2}$ .

$$\mathbf{c} = \mathbf{c} - \mathbf{a}_1(-1).\frac{1}{2}\left(\frac{\varepsilon}{1}\right) = \mathbf{c} + \frac{\varepsilon}{2}\mathbf{a}_1 = \begin{pmatrix} -2 + \dfrac{\varepsilon}{2} \\ -1 + \dfrac{\varepsilon}{2} \end{pmatrix} \qquad (21)$$

On voit donc que le nouveau vecteur égalisé est plus proche de la zone $Z_\varepsilon$ de $\dfrac{\varepsilon}{2}$ dans la direction $\mathbf{t}_1$ mais qu'en revanche sa composante selon $\mathbf{t}_2$ a été modifiée. Ceci explique que dans certains cas, on puisse sortir de la zone $Z_\varepsilon$ selon la direction $\mathbf{t}_2$ et qu'une itération dans la direction $\mathbf{t}_2$ soit donc à nouveau nécessaire.

Dans un second mode de réalisation de l'invention, on procède à une détection souple des symboles émis. Ce sera par exemple le cas lorsque les symboles successifs émis sont le résultat d'un codage d'une séquence binaire, par exemple du turbocodage d'un paquet de bits. Dans un tel cas, le décodeur convolutif (utilisant par exemple un algorithme SOVA ou un algorithme de Viterbi classique) nécessite de recevoir en entrée les valeurs souples des bits de la séquence compte tenu des symboles reçus.

On se place tout d'abord dans le cas d'un système SISO, c'est-à-dire à une seule antenne d'émission et une seule antenne de réception.

Si l'on note $b_{m,q}$ le $q^{ème}$ bit du mot ayant servi à générer le symbole émis $\mathbf{s}_m$ appartenant à l'alphabet de modulation A, le récepteur doit évaluer la valeur souple ou LLR (*Log Likelihood Ratio*), $L(b_{m,q})$ définie par :

$$L\left(b_{m,q}\right) = \ln \frac{P(b_{m,q} = 1 | \mathbf{y})}{P(b_{m,q} = 0 | \mathbf{y})} = \ln \frac{P(\mathbf{y} | b_{m,q} = 1)}{P(\mathbf{y} | b_{m,q} = 0)} \qquad (22)$$

où l'on rappelle que vecteur $\mathbf{y}$ représente le signal reçu (et où l'on a supposé que les probabilités *a priori* des deux valeurs binaire étaient identiques).

Les probabilités conditionnelles $P(\mathbf{y}|b_{m,q} = X)$ (avec $X$ = 0 ou 1) sont déterminées à partir de :

$$P(\mathbf{y} | b_{m,q} = X) = \sum_{\mathbf{u} \in S_{m,q}^X} P(\mathbf{y} | \mathbf{s} = \mathbf{u}) \qquad (23)$$

où $P(\mathbf{y}|\mathbf{s} = \mathbf{u})$ est la probabilité conditionnelle de recevoir le vecteur $\mathbf{y}$ sachant que le symbole émis est $\mathbf{u} \in S_{m,q}^X$, $S_{m,q}^X$ représentant l'ensemble de symbole de l'alphabet $A$ admettant $b_{m,q} = X$.

De manière classique, on peut approximer la somme des termes apparaissant à droite de la relation (23) par le terme prédominant (approximation dite Max-Log) :

$$P(\mathbf{y} | b_{m,q} = X) \approx \max_{u \in S_{m,q}^X}\left(P(\mathbf{y} | \mathbf{s} = \mathbf{u})\right) \qquad (24)$$

Compte tenu de la densité gaussienne de la probabilité conditionnelle, la valeur souple du bit $b_{m,q}$ s'exprime sous la forme suivante :

$$L\left(b_{m,q}\right) = \frac{1}{2\sigma_n^2}\left(\min_{\mathbf{u} \in S_{m,q}^1}\left(\|\mathbf{y} - \mathbf{Hu}\|^2 - \min_{\mathbf{u} \in S_{m,q}^0}\left(\|\mathbf{y} - \mathbf{Hu}\|^2\right)\right)\right) \qquad (25)$$

où $\mathbf{H}$ est la matrice du canal (ici réduite à un seul élément puisque le système est SISO).

La relation (25) s'étend sans peine à un système MIMO utilisant une détection linéaire :

$$L\left(b_{m,q}\right) = \frac{1}{2\sigma_{n,m}^2}\left(\min_{\mathbf{u}\in S_{m,q}^1}\left(\|\mathbf{r}-\mathbf{u}\|^2 - \min_{\mathbf{u}\in S_{m,q}^0}\left(\|\mathbf{r}-\mathbf{u}\|^2\right)\right)\right) \tag{26}$$

le vecteur $\mathbf{u}$ représentant alors le vecteur des symboles émis (et donc un élément de la constellation produit), $\mathbf{H}$ étant la matrice complexe du canal de taille $N_T \times N_T$, $\mathbf{r} = \mathbf{Wy}$ étant le vecteur égalisé où $\mathbf{y}$ représente le vecteur de taille $N_R$ des signaux reçus par les différentes antennes de réception, et où $\sigma_{n,m}^2$ représente la variance de bruit affectant la composante $r_m$ du vecteur égalisé. Du fait de cette égalisation, la variance de bruit n'est pas identique pour les différentes composantes :

$$\sigma_{n,m}^2 = \left(\sigma_n^2 \sum_{i=1}^{N_T}\left|\tilde{W}_{m,i}\right|^2 + \sigma_a^2 \sum_{\substack{j=1\\j\neq m}}^{N_T}\left|\tilde{\beta}_{m,j}\right|^2\right)\Bigg/\left|\tilde{\beta}_{m,m}\right|^2 \tag{27}$$

où $\tilde{W}_{m,i}$ est l'élément de la matrice $\tilde{\mathbf{W}}$ à la ligne $m$ et la colonne $i$, autrement dit correspondant à l'antenne de réception $m$ et à l'antenne d'émission $i$, $\beta_{m,j}$ est l'élément de la matrice $\beta = \tilde{\mathbf{W}}\mathbf{H}$ à la ligne $m$ et la colonne $j$, $\sigma_a^2$ est la puissance moyenne de la constellation de modulation (supposée identique pour toutes les antennes d'émission) et $\sigma_n^2$ est la variance du bruit affectant le signal reçu par une antenne de réception (la variance est supposée identique pour toutes les antennes de réception).

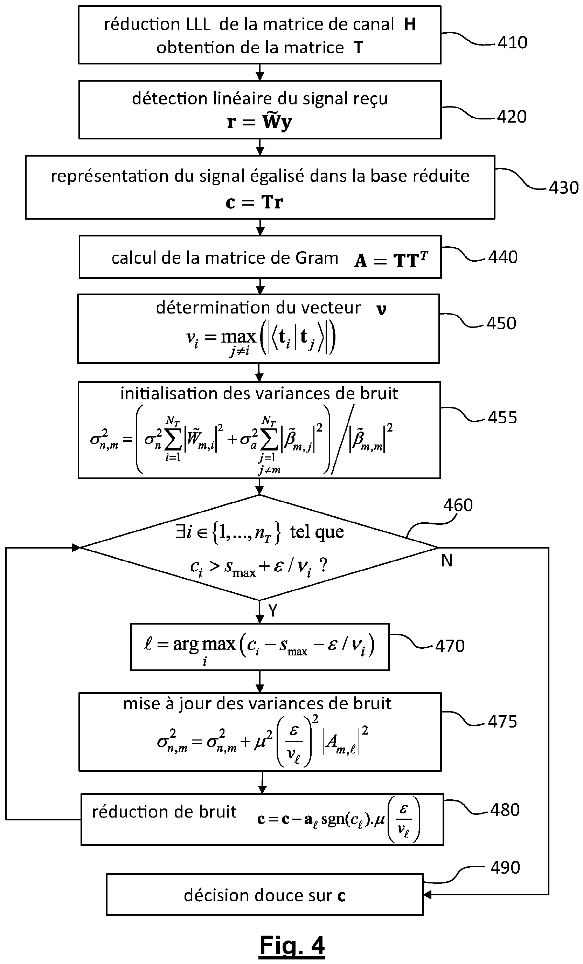

Le calcul des valeurs souples selon (26) et (27) doit être adapté dans le cas où on effectue une réduction itérative de bruit en sus de l'égalisation, comme illustré en relation avec la Fig. 4.

La Fig. 4 représente de manière schématique un ordinogramme d'une méthode de détection linéaire aidé par réseau de points et réduction successive de bruit selon un second mode de réalisation de l'invention.

Les étapes 410 à 480 sont identiques aux étapes 210 à 280 déjà décrites en relation avec la Fig. 2 et leur description ne sera donc pas reprise ici.

En revanche, une étape d'initialisation a été ajoutée en 455 ainsi qu'une étape de mise à jour de la puissance de bruit en 475.

Plus précisément, on initialise en 455 les variances de bruit (ou puissances de bruit) affectant les différentes composantes du vecteur égalisé au moyen de la relation (27).

Ensuite, à chaque itération on met à jour en 475 les variances de bruit $\sigma_{n,m}^2$ au moyen de :

$$\sigma_{n,m}^2 = \sigma_{n,m}^2 + \mu^2\left(\frac{\varepsilon}{v_\ell}\right)^2\left|A_{m,\ell}\right|^2 \tag{28}$$

où $A_{m,\ell}$ est l'élément à la ligne $m$ et la colonne $\ell$ de la matrice de Gram, $\mathbf{A}$. On comprendra de l'expression (28) que seules les variances relatives aux composantes impactées par la réduction de bruit sont mises à jour.

Enfin à l'étape 490, au lieu de prendre une décision dure comme à l'étape 290, on calcule les distances du vecteur égalisé eaux différents points de la constellation produit puis l'on calcule des valeurs souples des différents bits au moyen de :

$$L\left(b_{m,q}\right) = \frac{1}{2\sigma_{n,m}^2}\left(\min_{\mathbf{u}\in S_{m,q}^1}\left(\|\mathbf{c}-\mathbf{u}\|^2 - \min_{\mathbf{u}\in S_{m,q}^0}\left(\|\mathbf{c}-\mathbf{u}\|^2\right)\right)\right) \tag{29}$$

les variances de bruit $\sigma_{n,m}^2$ affectant les différentes composantes du vecteur égalisé ayant été mises à jour lors des itérations successives selon (28).

Si un turbocodage a été réalisé à l'émission pour générer des symboles sur chacune des antennes, on pourra procéder à un décodage de type BCJR utilisant en entrée les valeurs souples fournies par l'étape 490.

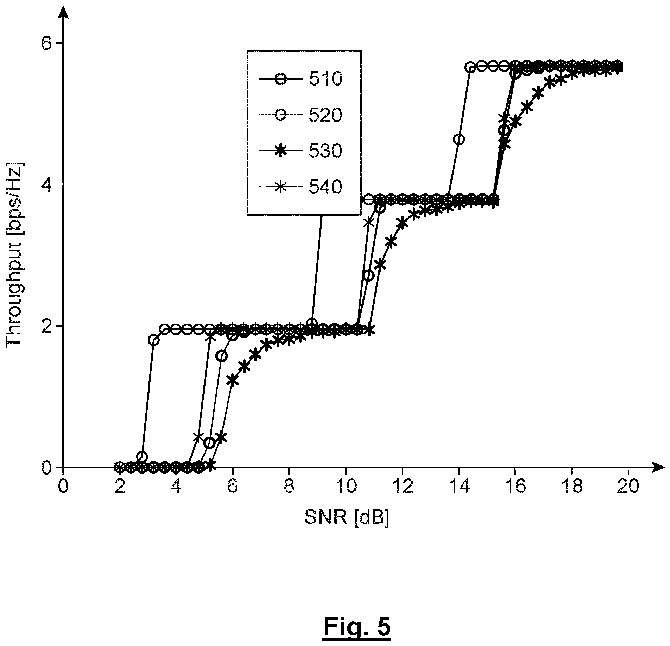

La Fig. 5 représente le débit du système MIMO en fonction du rapport signal sur bruit pour un procédé de détection selon le second mode de réalisation de l'invention et selon un procédé de détection selon l'état de la technique.

Le système MIMO utilisé était un système 2×2 avec une modulation 16-QAM. Un turbocodage de rendement

$$R = \frac{1}{2}$$

sur des paquets de 6144 bits a été effectué à l'émission avant la modulation 16-QAM pour chaque antenne.

Le débit du système est donné par $\rho(1-\eta)^Q$ où $\rho$ est la vitesse de transmission en bit/s, $Q$ est la taille du paquet et $\eta$ est le taux d'erreur binaire.

La courbe 510 représente le débit du système lorsque l'on effectue à la réception une détection linéaire de type ZF et un calcul de valeurs souples selon (22) et (23), c'est-à-dire sans l'approximation Max-Log, avant d'effectuer un décodage BCJR.

La courbe 520 représente le débit du système lorsque l'on effectue à la réception une détection linéaire de type ZF, une suppression itérative de bruit selon le second mode de réalisation de l'invention, et un calcul des valeurs souples selon (22) et (23) avant d'effectuer un décodage BCJR.

La courbe 530 représente le débit du système dans les mêmes conditions que 510 mais en utilisant l'approximation Max-Log, autrement dit en utilisant les expressions de valeurs souples selon (26) et (27).

La courbe 540 représente le débit du système selon le second mode de réalisation de l'invention, mais en utilisant l'approximation Max-Log, autrement dit en utilisant les expressions de valeurs souples selon (26) et (27) et la mise à jour itérative des variances selon (28), avant d'effectuer un décodage canal.

On remarque une amélioration importante du débit dans le cas où on utilise le second mode de réalisation de l'invention, cf. courbes (520) et (540), au lieu d'une méthode de détection de l'état de la technique, cf. courbes (510) et (530).

**Revendications**

1. Méthode de détection pour récepteur de système MIMO à $N_T$ antennes d'émission et $N_R$ antennes de réception, **caractérisé par** une matrice de canal **H**, chaque antenne d'émission transmettant un symbole appartenant à une constellation de modulation, le vecteur des symboles émis appartenant à une constellation produit dans l'espace $\mathbb{R}^{2N_T}$, la matrice de canal **H** faisant l'objet d'une réduction LLL pour fournir une matrice de canal réduite, $\tilde{\mathbf{H}}$, telle que $\tilde{\mathbf{H}} = \mathbf{HT}$ où **T** est une matrice unimodulaire, le vecteur des signaux reçus par les antennes de réception étant égalisé au moyen d'une matrice de détection linéaire $\tilde{\mathbf{W}}$, obtenue à partir de la matrice de canal réduite, $\tilde{\mathbf{H}}$, pour fournir un vecteur égalisé **r**, le vecteur égalisé étant représenté par **c = Tr** dans une base réduite formée des vecteurs colonnes, $\mathbf{t}_j$, $j = 1, ..., 2N_T$ de la matrice **T**, **caractérisée en ce que** l'on définit, dans la représentation selon la base réduite, une zone de réception non bruitée $Z_\varepsilon$ entourant la constellation produit avec une marge de tolérance prédéterminée $\varepsilon$, le vecteur égalisé dans la base réduite faisant ensuite l'objet d'un processus itératif de suppression de bruit dans lequel, à chaque itération, on recherche la composante, $\ell$, du vecteur égalisé dans la base réduite, la plus éloignée de la zone de réception non bruitée, et l'on soustrait du vecteur égalisé dans la base réduite, c, un vecteur de bruit déterminé par $\mathbf{a}_\ell \, \mathrm{sgn}(c_\ell) . \mu . \left( \dfrac{\varepsilon}{v_\ell} \right)$ où $v_\ell = \max_{j \neq \ell} \left( \left| \left\langle \mathbf{t}_\ell \middle| \mathbf{t}_j \right\rangle \right| \right)$ et où $\mathbf{a}_\ell$ est la $\ell$-ème colonne de la matrice **A**, où **A** est la matrice Gram de la base réduite, $\mathbf{A} = \mathbf{TT}^T$, $\mathrm{sgn}(c_\ell)$ est le signe de la $\ell$-ème composante du vecteur égalisé dans la base réduite, **c**, et $\mu$ est la valeur d'une fraction, le processus étant itéré jusqu'à ce que le point représentatif du vecteur égalisé dans la base réduite se trouve dans ladite zone de réception non bruitée ou qu'un nombre prédéterminé d'itérations soit atteint, le résultat de la détection étant obtenu en effectuant une décision dure ou souple sur le vecteur égalisé dans la base réduite au terme du processus itératif.

2. Méthode de détection selon la revendication 1, **caractérisée en ce que** la matrice de détection linéaire est choisie parmi des matrices de détection ZF, MMSE ou MF définies respectivement par :

$$\tilde{\mathbf{W}}_{ZF} = \tilde{\mathbf{H}}^{\dagger} = (\tilde{\mathbf{H}}^{H} \tilde{\mathbf{H}})^{-1} \tilde{\mathbf{H}}^{H}$$

$$\tilde{\mathbf{W}}_{MMSE} = (\tilde{\mathbf{H}}^H \tilde{\mathbf{H}} + \sigma_n^2 \mathbf{I}_{N_R})^{-1} \tilde{\mathbf{H}}^H$$

$$\tilde{\mathbf{W}}_{MF} = \tilde{\mathbf{H}}^H$$

où $\sigma_n^2$ est la variance du bruit affectant le signal reçu par une antenne de réception et $\mathbf{I}_{N_R}$ est la matrice identité de taille $N_R$.

3. Méthode de détection selon la revendication 1 ou 2, **caractérisée en ce que** les constellations de modulation relatives aux différentes antennes d'émission sont des constellations QAM.

4. Méthode de détection selon la revendication 3, **caractérisée en ce que** les constellations de modulation relatives aux différentes antennes sont identiques.

5. Méthode de détection selon la revendication 4, **caractérisée en ce que** pour déterminer la composante du vecteur égalisé dans la base réduite, la plus éloignée de la zone non bruitée, on recherche l'indice $\ell$ tel que

$$\ell = \arg \max_i \left( c_i - s_{\max} - \varepsilon / v_i \right)$$

où $c_i$ est la i$^{ème}$ composante du vecteur égalisé dans la base réduite, **c**, $s_{\max}$ est l'amplitude maximale de la constellation QAM.

6. Méthode de détection selon l'une quelconque des revendications 1 à 5, **caractérisée en ce que** $\mu = \dfrac{1}{2}$.

7. Méthode de détection selon l'une des revendications précédentes, **caractérisée en ce que** l'on effectue une décision dure sur le vecteur égalisé dans la base réduite au terme du processus itératif, en recherchant le point de la constellation produit le plus proche de ce vecteur.

8. Méthode de détection selon l'une quelconque des revendications 1 à 5, **caractérisée en ce que** préalablement au processus itératif, on initialise les variances, $\sigma_{n,m}^2$, du bruit affectant chacune des composantes du vecteur égalisé

$$\sigma_{n,m}^2 = \left( \sigma_n^2 \sum_{i=1}^{N_T} \left| \tilde{W}_{m,i} \right|^2 + \sigma_a^2 \sum_{\substack{j=1 \\ j \neq m}}^{N_T} \left| \tilde{\beta}_{m,j} \right|^2 \right) \Big/ \left| \tilde{\beta}_{m,m} \right|^2$$

dans la base réduite, **c**, par où $\sigma_n^2$ est la variance du bruit affectant le signal reçu par une antenne de réception, $\sigma_a^2$ est la puissance moyenne de la constellation de modulation, $\tilde{W}_{m,i}$ est l'élément de la matrice $\tilde{\mathbf{W}}$ à la ligne $m$ et la colonne $i$, $\tilde{\beta}_{m,j}$ est l'élément de la matrice $\beta = \tilde{\mathbf{W}}\mathbf{H}$ à la ligne $m$

$$\sigma_{n,m}^2 = \sigma_{n,m}^2 + \mu^2 \left( \frac{\varepsilon}{v_\ell} \right)^2 \left| A_{m,\ell} \right|^2$$

et la colonne $j$ et qu'à chaque itération on met ensuite à jour ces variances par où $A_{m,\ell}$ est l'élément à la ligne $m$ et la colonne $\ell$ de la matrice de Gram, **A**.

9. Méthode de détection selon la revendication 8, **caractérisée en ce que** l'on calcule pour chaque symbole émis par une antenne d'émission $m$ les valeurs souples des différents bits $b_{m,q}$, $b_{m,q}$ étant le $q^{ème}$ bit du mot ayant servi à générer le symbole émis $\mathbf{s}_m$, les valeurs souples étant données par

$$L\left( b_{m,q} \right) = \frac{1}{2\sigma_{n,m}^2} \left( \min_{\mathbf{u} \in S_{m,q}^1} \left( \| \mathbf{c} - \mathbf{u} \|^2 - \min_{\mathbf{u} \in S_{m,q}^0} \left( \| \mathbf{c} - \mathbf{u} \|^2 \right) \right) \right)$$

où $\sigma_{n,m}^2$ est la valeur de la variance affectant la $m$-ème composante du vecteur égalisé dans la base réduite, **c**, au terme du processus itératif, $S_{m,q}^0$ est l'ensemble des points de la constellation produit admettant $b_{m,q}$ =0 et $S_{m,q}^{1}$ est l'ensemble des points de la constellation produit admettant $b_{m,q}$ =1.

## Patentansprüche

1. Erfassungsverfahren für einen MIMO-Systemempfänger mit $N_T$ Sendeantennen und $N_R$ Empfangsantennen, **gekennzeichnet durch** eine Kanalmatrix H, wobei jede Sendeantenne ein Symbol überträgt, das zu einer Konstellation der Modulation gehört, wobei der Vektor der gesendeten Symbole zu einer Konstellation gehört, die im Raum $\mathbb{R}^{2N_T}$ erzeugt wird, wobei die Kanalmatrix H einer Reduktion LLL unterliegt, um eine reduzierte Kanalmatrix H bereitzustellen, so dass $\tilde{H}$ = HT, wobei T eine unimodulare Matrix ist, wobei der Vektor der Signale, die von den Empfangsantennen empfangen werden, mittels einer linearen Erfassungsmatrix $\tilde{W}$ ausgeglichen wird, die ausgehend von der reduzierten Kanalmatrix $\tilde{H}$ erhalten wird, um einen ausgeglichenen Vektor r bereitzustellen, wobei der ausgeglichene Vektor als c = Tr in einer reduzierten Basis dargestellt wird, die aus den Spaltenvektoren $t_j$, j = 1,...,$2N_T$ der Matrix T gebildet wird, **dadurch gekennzeichnet, dass**, in der Darstellung gemäß der reduzierten Basis, ein nicht verrauschter Empfangsbereich $Z_\varepsilon$ definiert wird, der die Konstellation umgibt, die mit einer vorbestimmten Toleranzmarche $\varepsilon$ erzeugt wird, wobei der in der reduzierten Basis ausgeglichene Vektor dann einem iterativen Rauschunterdrückungsprozess unterzogen wird, wobei, bei jeder Iteration, die Komponente $\ell$ gesucht wird, des in der reduzierten Basis ausgeglichenen Vektors, die am weitesten von dem nicht verrauschten Empfangsbereich entfernt ist, und von dem in der reduzierten Basis ausgeglichenen Vektor, c, ein Rauschvektor subtrahiert wird, der durch

$$a_\ell \text{sgn}(c_\ell).\mu.\left(\frac{\varepsilon}{v_\ell}\right)$$

bestimmt ist, wobei

$$v_\ell = \max_{j \neq \ell}(|\langle t_\ell | t_j \rangle|),$$

wobei $a_\ell$ die $\ell$-te Spalte der Matrix A ist, wobei A die Gram-Matrix der reduzierten Basis ist, A = TT$^T$, wobei sgn($c_\ell$) das Vorzeichen der $\ell$-ten Komponente des in der reduzierten Basis ausgeglichenen Vektors, c, ist, und $\mu$ der Wert eines Anteils ist, wobei der Prozess iteriert wird, bis der repräsentative Punkt des in der reduzierten Basis ausgeglichenen Vektors im nicht verrauschten Empfangsbereich liegt oder eine vorbestimmte Anzahl von Iterationen erreicht ist, wobei das Ergebnis der Erfassung erhalten wird, indem am Ende des iterativen Prozesses eine harte oder weiche Entscheidung über den in der reduzierten Basis ausgeglichene Vektor getroffen wird.

2. Erfassungsverfahren nach Anspruch 1, **dadurch gekennzeichnet, dass** die lineare Erfassungsmatrix ausgewählt wird aus ZF-, MMSE- oder MF-Erfassungsmatrizen, die jeweils definiert sind durch:

$$\tilde{W}_{ZF} = \tilde{H}^\dagger = (\tilde{H}^H\tilde{H})^{-1}\tilde{H}^H$$

$$\tilde{W}_{MMSE} = (\tilde{H}^H\tilde{H}+\sigma_n^2 I_{N_R})^{-1}\tilde{H}^H$$

$$\tilde{W}_{MF} = \tilde{H}^H$$

wobei $\sigma_n^2$ die Varianz des Rauschens ist, das das Signal beeinflusst, das von einer Empfangsantenne empfangen wird, und $I_{N_R}$ die Identitätsmatrix der Größe $N_R$ ist.

3. Erfassungsverfahren nach Anspruch 1 oder 2, **dadurch gekennzeichnet, dass** die Konstellationen der Modulation in Bezug auf die verschiedenen Sendeantennen QAM-Konstellationen sind.

4. Erfassungsverfahren nach Anspruch 3, **dadurch gekennzeichnet, dass** die Konstellationen der Modulation in Bezug auf die verschiedenen Antennen identisch sind.

5. Erfassungsverfahren nach Anspruch 4, **dadurch gekennzeichnet, dass** zur Bestimmung der Komponente des in der reduzierten Basis ausgeglichenen Vektors, die am weitesten von dem nicht verrauschten Empfangsbereich entfernt ist, der Index $\ell$ gesucht wird, so dass $\ell = \arg\max_{i}\left(c_i - s_{\max} - \varepsilon/v_i\right)$ , wobei $c_i$ die $i$-te Komponente des in der reduzierten Basis ausgeglichenen Vektors, c, ist, und $s_{\max}$ die maximale Amplitude der QAM-Konstellation ist.

6. Erfassungsverfahren nach einem der Ansprüche 1 bis 5, **dadurch gekennzeichnet, dass** $\mu = \frac{1}{2}$ .

7. Erfassungsverfahren nach einem der vorhergehenden Ansprüche, **dadurch gekennzeichnet, dass** am Ende des iterativen Prozesses eine harte Entscheidung über den in der reduzierten Basis ausgeglichenen Vektor getroffen wird, indem nach dem Punkt der erzeugten Konstellation gesucht wird, der diesem Vektor am nächsten ist.

8. Erfassungsverfahren nach einem der Ansprüche 1 bis 5, **dadurch gekennzeichnet, dass** vor dem iterativen Prozess die Varianzen $\sigma_{n,m}^2$ des Rauschens initialisiert werden, das jede der Komponenten des in der reduzierten Basis ausgeglichenen Vektors, c, durch

$$\sigma_{n,m}^2 = \left(\sigma_n^2 \sum_{i=1}^{N_T}\left|\tilde{W}_{m,i}\right|^2 + \sigma_a^2 \sum_{\substack{j=1 \\ j \neq m}}^{N_T}\left|\tilde{\beta}_{m,j}\right|^2\right)\bigg/\left|\tilde{\beta}_{m,m}\right|^2$$

beeinflusst, wobei $\sigma_n^2$ die Varianz des Rauschens ist, das das von einer Empfangsantenne empfangene Signal beeinflusst, $\sigma_a^2$ die durchschnittliche Leistung der Konstellation der Modulation ist, $\tilde{W}_{m,i}$ das Element der Matrix $\tilde{W}$ in der Zeile $m$ und Spalte $i$ ist, $\tilde{\beta}_{m,j}$ das Element der Matrix $\beta = \tilde{W}H$ in der Zeile $m$ und Spalte $j$ ist, und dass dann bei jeder Iteration

$$\sigma_{n,m}^2 = \sigma_{n,m}^2 + \mu^2\left(\frac{\varepsilon}{v_\ell}\right)^2\left|A_{m,\ell}\right|^2$$

diese Varianzen um aktualisiert werden, wobei $A_{m,\ell}$ das Element in der Zeile $m$ und Spalte $\ell$ der Gram-Matrix, A, ist.

9. Erfassungsverfahren nach Anspruch 8, **dadurch gekennzeichnet, dass** für jedes von einer Sendeantenne $m$ gesendete Symbol die weichen Werte der verschiedenen Bits $b_{m,q}$ berechnet werden, wobei $b_{m,q}$ das $q$-te Bit des Wortes ist, das zur Generierung des gesendeten Symbols $s_m$ verwendet wird, wobei die weichen Werte durch

$$L\left(b_{m,q}\right) = \frac{1}{2\sigma_{n,m}^2}\left(\min_{\mathbf{u}\in S_{m,q}^1}\left(\|\mathbf{c}-\mathbf{u}\|^2 - \min_{\mathbf{u}\in S_{m,q}^0}\left(\|\mathbf{c}-\mathbf{u}\|^2\right)\right)\right)$$

gegeben sind, wobei $\sigma_{n,m}^2$ der Wert der Varianz ist, die die m-te Komponente des in der reduzierten Basis ausgeglichenen Vektors, c, beeinflusst, am Ende des iterativen Prozesses, $S_{m,q}^0$ die Menge der Punkte in der erzeugten Konstellation ist, die $b_{m,q} = 0$ zulässt, und $S_{m,q}^1$ die Menge der Punkte in der erzeugten Konstellation ist, die $b_{m,q} = 1$ zulässt.

**Claims**

1. Detection method for a MIMO system receiver with $N_T$ transmit antennas and $N_R$ receive antennas, **characterised by** a channel matrix H, each transmit antenna transmitting a symbol belonging to a modulation constellation, the vector of the transmitted symbols belonging to a product constellation in the space $\mathbb{R}^{2N_T}$ , the channel matrix H undergoing a LLL reduction in order to provide a reduced channel matrix $\tilde{H}$, such that $\tilde{H}$ = HT where T is a unimodular matrix, the vector of the signals received by the receive antennas being equalised by means of a linear detection matrix $\tilde{W}$, obtained from the reduced channel matrix $\tilde{H}$, in order to provide an equalised vector r, the equalised vector being represented by c = Tr in a reduced basis formed by the column vectors, $\mathbf{t}_j$, $j$ = 1, ..., $2N_T$ of the matrix T, **characterised in that** a receive area unperturbed by noise $Z_\varepsilon$ is defined, in the representation according to the reduced basis, which area surrounds the product constellation with a predetermined tolerance margin $\varepsilon$, the equalised vector in the reduced basis then undergoing an iterative noise cancellation process wherein, upon each iteration, a search is carried out for the component, $\ell$, of the equalised vector in the reduced basis, that is located the furthest from the receive area unperturbed by noise, and a noise vector is subtracted from the equalised vector in the reduced basis, c, the noise vector being determined by $a_\ell \, \text{sgn}(c_\ell).\mu.\left(\dfrac{\varepsilon}{v_\ell}\right)$ where $v_\ell = \max_{j \neq \ell}\left(\left\|\left\langle \mathbf{t}_\ell \middle| \mathbf{t}_j \right\rangle\right\|\right)$ and where $a_\ell$ is the $\ell$-th column of the matrix A, where A is the Gram matrix of the reduced basis $A = TT^T$, $\text{sgn}(c_\ell)$ is the sign of the f -th component of the equalised vector c and $\mu$ is the value of a fraction, the process being iterated until the point representative of the equalised vector is located within said receive area unperturbed by noise or until a predetermined number of iterations is reached, the result of the detection being obtained by making a hard or soft decision on the equalised vector at the end of the iterative process.

2. Detection method according to claim 1, **characterised in that** the linear detection matrix is selected from the ZF, MMSE or MF detection matrices respectively defined by:

$$\tilde{W}_{ZF} = \tilde{H}^\dagger = (\tilde{H}^H \tilde{H})^{-1} \tilde{H}^H$$

$$\tilde{W}_{MMSE} = (\tilde{H}^H \tilde{H} + \sigma_n^2 I_{N_R})^{-1} \tilde{H}^H$$

$$\tilde{W}_{MF} = \tilde{H}^H$$

where $\sigma_n^2$ is the variance of the noise affecting the signal received by a receive antenna and $I_{N_R}$ is the identity matrix of size $N_R$.

3. Detection method according to claim 1 or 2, **characterised in that** the modulation constellations relative to the different transmit antennas are QAM constellations.

4. Detection method according to claim 3, **characterised in that** the modulation constellations relative to the different antennas are identical.

5. Detection method according to claim 4, **characterised in that** in order to determine the component of the equalised vector in the reduced basis, that is located the furthest from the area unperturbed by noise, the index $\ell$ is sought such that $\ell = \arg \max_i \left( c_i - s_{max} - \varepsilon / v_i \right)$ where $c_i$ is the $i^{th}$ component of the equalised vector C, $s_{max}$ is the maximum amplitude of the QAM constellation.

6. Detection method according to any of the claims 1 to 5, **characterised in that** $\mu = \dfrac{1}{2}$.

7. Detection method according to one of the preceding claims, **characterised in that** a hard decision is made on the equalised vector at the end of the iterative process, by searching for the point of the product constellation that is located the closest to this vector.

8. Detection method according to any of the claims 1 to 5, **characterised in that** prior to the iterative process, the

variances $\sigma_{n,m}^2$ of the noise affecting each of the components of the equalised vector c are initialised by

$$\sigma_{n,m}^2 = \left( \sigma_n^2 \sum_{i=1}^{N_T} \left| \tilde{W}_{m,i} \right|^2 + \sigma_a^2 \sum_{\substack{j=1 \\ j \neq m}}^{N_T} \left| \tilde{\beta}_{m,j} \right|^2 \right) \Big/ \left| \tilde{\beta}_{m,m} \right|^2$$

where $\sigma_n^2$ is the variance of the noise affecting the signal received by a receive antenna, $\sigma_a^2$ is the average power of the modulation constellation, $\tilde{W}_{m,i}$ is the element of the matrix $\tilde{W}$ in the row $m$ and in the column $i$, $\tilde{\beta}_{m,j}$ is the element of the matrix $\beta = \tilde{W}H$ in the row $m$ and in the

$$\sigma_{n,m}^2 = \sigma_{n,m}^2 + \mu^2 \left( \frac{\varepsilon}{v_\ell} \right)^2 \left| A_{m,\ell} \right|^2$$

column $j$ and that at each iteration, these variances are then updated by where $A_{m,\ell}$ is the element in the row $m$ and in the column $\ell$ of the Gram matrix A.

9. Detection method according to claim 8, **characterised in that** for each symbol transmitted by a transmit antenna $m$, the soft values of the different bits $b_{m,q}$ are computed, where $b_{m,q}$ is the $q^{th}$ bit of the word having been used to generate the transmitted symbol $s_m$, the soft values being given by

$$L\left( b_{m,q} \right) = \frac{1}{2\sigma_{n,m}^2} \left( \min_{\mathbf{u} \in S_{m,q}^1} \left( \| \mathbf{c} - \mathbf{u} \|^2 - \min_{\mathbf{u} \in S_{m,q}^0} \left( \| \mathbf{c} - \mathbf{u} \|^2 \right) \right) \right)$$

where $\sigma_{n,m}^2$ is the value of the variance affecting the $m$-th component of the equalised vector c at the end of the iterative process, $S_{m,q}^0$ is the set of points of the product constellation, assuming $b_{m,q} = 0$ and $S_{m,q}^1$ is the set of points of the product constellation, assuming $b_{m,q} = 1$.

**H**

<u>Fig. 1</u>

réduction LLL de la matrice de canal **H**
obtention de la matrice **T** —210

détection linéaire du signal reçu
$$\mathbf{r} = \widetilde{\mathbf{W}}\mathbf{y}$$ —220

représentation du signal égalisé dans la base réduite
$$\mathbf{c} = \mathbf{Tr}$$ —230

calcul de la matrice de Gram
$$\mathbf{A} = \mathbf{TT}^T$$ —240

détermination du vecteur **v**
$$v_i = \max_{j \neq i}\left(\left|\langle \mathbf{t}_i | \mathbf{t}_j \rangle\right|\right)$$ —250

260

$$\exists i \in \{1, ..., n_T\} \text{ tel que}$$
$$c_i > s_{\max} + \varepsilon / v_i \, ?$$   N

Y

$$\ell = \arg\max_i\left(c_i - s_{\max} - \varepsilon / v_i\right)$$ —270

réduction de bruit
$$\mathbf{c} = \mathbf{c} - \mathbf{a}_\ell \, \text{sgn}(c_\ell).\mu\left(\frac{\varepsilon}{v_\ell}\right)$$ —280

290

décision dure sur **c**

**Fig. 2**

$Z_\varepsilon$

A

B

$\varepsilon$

$t_1$

$t_2$

$\varepsilon$

C

D

Iterative noise reduction

M=(-2;-1)

**Fig. 3**

réduction LLL de la matrice de canal **H**
obtention de la matrice **T** — 410

détection linéaire du signal reçu
$$\mathbf{r} = \widetilde{\mathbf{W}}\mathbf{y}$$ — 420

représentation du signal égalisé dans la base réduite
$$\mathbf{c} = \mathbf{Tr}$$ — 430

calcul de la matrice de Gram $$\mathbf{A} = \mathbf{TT}^T$$ — 440

détermination du vecteur **v**
$$v_i = \max_{j \neq i}\left(\left\|\langle \mathbf{t}_i | \mathbf{t}_j \rangle\right\|\right)$$ — 450

initialisation des variances de bruit
$$\sigma_{n,m}^2 = \left( \sigma_n^2 \sum_{i=1}^{N_T} \left|\widetilde{W}_{m,i}\right|^2 + \sigma_a^2 \sum_{\substack{j=1\\ j \neq m}}^{N_T} \left|\widetilde{\beta}_{m,j}\right|^2 \right) \Big/ \left|\widetilde{\beta}_{m,m}\right|^2$$ — 455

460

$$\exists i \in \{1,...,n_T\} \text{ tel que}$$
$$c_i > s_{\max} + \varepsilon / v_i \ ?$$ N

Y

$$\ell = \arg\max_i \left( c_i - s_{\max} - \varepsilon / v_i \right)$$ — 470

mise à jour des variances de bruit
$$\sigma_{n,m}^2 = \sigma_{n,m}^2 + \mu^2 \left(\frac{\varepsilon}{v_\ell}\right)^2 \left|A_{m,\ell}\right|^2$$ — 475

réduction de bruit $$\mathbf{c} = \mathbf{c} - \mathbf{a}_\ell \, \mathrm{sgn}(c_\ell).\mu\left(\frac{\varepsilon}{v_\ell}\right)$$ — 480

490

décision douce sur **c**

**Fig. 4**

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **D. WÜBBEN.** Near-maximum likelihood détection of MIMO systems using MMSE-based lattice réduction. *Proc. IEEE International Conférence on Communications,* Juin 2004, vol. 2, 798-802